# EUROPÄISCHE PATENTSCHRIFT

(11) **EP 2 073 082 B1**
(45) Veröffentlichungstag und Bekanntmachung des Hinweises auf die Patenterteilung: **20.07.2011**
(21) Anmeldenummer: 07024427.2
(22) Anmeldetag: 17.12.2007
(51) Int. Cl.: G05B 19/042, G05B 19/05, G06F 9/445

(54) **Verfahren zum Initialisieren eines Datenspeichers und Automatisierungskomponente**
Method for initialising a data storage system and automation component
Procédé d'initialisation d'une mémoire de données et composant d'automatisation

(43) Veröffentlichungstag der Anmeldung: 24.06.2009
(73) Patentinhaber: SIEMENS AKTIENGESELLSCHAFT, 80333 München (DE)
(72) Erfinder: Steindl, Günter, 92284 Poppenricht (DE)

(56) Entgegenhaltungen:
- EP-A- 1 223 484
- DE-A1- 19 706 957
- DE-U1-202007 004 303
- GB-A- 2 403 042
- US-A1- 2006 093 372

## Beschreibung

Die Erfindung betrifft ein Verfahren zum Initialisieren eines Datenspeichers einer Automatisierungskomponente, wobei die Automatisierungskomponente eine Kommunikationsschnittstelle mit zumindest einer ersten Datenleitung und einer zweiten Datenleitung aufweist.

Des Weiteren betrifft die Erfindung eine Automatisierungskomponente, umfassend eine Kommunikationsschnittstelle mit zumindest einer ersten Datenleitung und einer zweiten Datenleitung, einem Datenspeicher und einem Rechenbaustein.

Auf dem Gebiet der Automatisierungstechnik existieren bereits eine Vielzahl von unterschiedlichen Automatisierungskomponenten. Diese Automatisierungskomponenten sind in der Regel über Kommunikationsschnittstellen mit einem Datennetzwerk verbunden. Über dieses Datennetzwerk können unterschiedliche Prozessdaten zwischen den Automatisierungskomponenten ausgetauscht werden oder von einer Feldebene bis in eine Leitebene übermittelt werden und umgekehrt. In der Feldebene wird ein Feldbus eingesetzt, der eine Vielzahl von Feldgeräten, wie Messfühler, Sensoren, Stellglieder und Antriebe mit einem Steuerungsgerät oder einer Automatisierungskomponente verbindet. In der Automatisierungstechnik hat sich die so genannte dezentrale Peripherie, d.h., die Anbindung von Ein- und Ausgängen über Automatisierungskomponenten, welche an Feldbusse angeschlossen sind, an die nächst höhere Automatisierungskomponente durchgesetzt. Die Sensoren und Aktoren, welche die entsprechenden Ein- und Ausgänge bzw. Ein- und Ausgangssignale für die dezentrale Peripherie repräsentieren, werden dort eingebaut, wo sie benötigt werden und haben daher, insbesondere im industriellen Umfeld, hohe Anforderungen an die Bauform und die Schutzklasse. Auch die Automatisierungskomponenten der dezentralen Peripherie, welche die Ein- und Ausgangssignale sammeln, müssen die Schutzklasse erreichen. Beispielsweise darf Wasser, das aus jeder Richtung als Strahl gegen das Gehäuse gerichtet ist, keine schädlichen Wirkungen an der Automatisierungskomponente hervorrufen. Aus diesem Grund können in diese Geräte nur mit sehr großem konstruktuellen Aufwand Schalter, Stecker oder wechselbare Speichermedien eingebaut werden.

Für den Betrieb der Automatisierungskomponenten an einem Feldbus sind Kommunikationsparameter erforderlich, die dauerhaft in einem Datenspeicher in den Automatisierungskomponenten gespeichert werden. Diese Kommunikationsparameter repräsentieren beispielsweise eine durchgängige Projektierung und ermöglichen es den Automatisierungskomponenten die Kommunikation am Netz aufzunehmen. Wird eine solche Automatisierungskomponente, beispielsweise im Rahmen einer Störung oder eines Umbaus, anderweitig eingesetzt, so können die gespeicherten und gegenüber dem Auslieferungszustand veränderten Kommunikationsparameter einen erneuten Betrieb der Automatisierungskomponente an dem Feldbus verhindern. Diese Fehlparametrierung kann dazu führen, dass diese Automatisierungskomponente im Anlagenverbund nicht mehr ansprechbar ist oder sich fehlerhaft verhält. Für diesen Fall ist vorgesehen, dass die Automatisierungskomponente in einen betriebssicheren Zustand, z.B. in den Auslieferungszustand zurückgesetzt wird. Die in dem Auslieferungszustand gültige Parametrierung der Kommunikationsparameter gewährleistet die Erreichbarkeit der Automatisierungskomponente über den Feldbus und stellt somit einen Anlauf der Anlage sicher.

Nach dem bekannten Stand der Technik wird das Rücksetzen in den Auslieferungszustand bei den Automatisierungskomponenten über das Betätigen eines Reset-Schalters realisiert. Auch können die Kommunikationsparameter des Auslieferungszustandes über ein wechselbares Speichermedium in die Automatisierungskomponente geladen werden. Nachteilig hieran ist, dass entweder durch konstruktive Maßnahmen beispielsweise ein zusätzlicher Schalter in das Gerät eingebaut werden muss, welcher den Anforderungen der Schutzklasse genügen muss und somit das Gerät in seiner Herstellung verteuert oder das ein Speichermedium getauscht werden muss, wobei auch hier beispielsweise der Einbau eines Schachtes, einer Abdeckung oder einer Gummidichtung, die Herstellung verteuert. Die Variante eines wechselbaren Speichermediums ist für den Betreiber einer Automatisierungsanlage ungünstig. Um das Speichermedium zu wechseln, muss er eine Vielzahl von manuellen Handgriffen ausführen. Beispielsweise sind im eingebauten Zustand solcher Automatisierungskomponenten diese nicht mehr frei zugänglich und müssen durch aufwendige Montagearbeiten zugänglich gemacht werden.

In der EP 1 223 484 A werden zwei Varianten von Installationsgeräten offenbart. Eine erste Variante ist mit einem Drehschalter versehen und eine zweite Variante mit einem Koprozessor. Bei beiden dieser Varianten ist für das Installationsgerät zusätzliche Hardware erforderlich.

In der DE 20 2007 004303 U1 wird ein Kommunikationsgerät offenbart, nämlich ein optischer Transceiver, welcher in einem Back Mode betrieben werden kann, ohne das dieses zusätzliche Hardware erfordert.

Aufgabe der Erfindung ist es, ein Verfahren bereitzustellen, um eine Automatisierungskomponente mit vereinfachtem Aufwand, bezogen auf die Konstruktion der Automatisierungskomponente, sowie auf die manuelle Wartung, in einen definierten Anfangszustand bzw. in den Auslieferungszustand zu versetzen.

Die Aufgabe wird durch ein Verfahren für die eingangs genannte Automatisierungskomponente durch die Merkmalskombination des Anspruchs 1 gelöst, wobei ein Sendesignal der ersten Datenleitung auf die zweite Datenleitung zurückgekoppelt wird, wobei die Rückkopplung der Signale an der Automatisierungskomponente in einem Rechenbaustein als ein Initialisierungssignal erkannt und der Datenspeicher initialisiert wird. Unter Datenleitung ist beispielsweise eine einzelne Signalleitung eines mehradrigen Datenbusses zu verstehen. Bei Automatisierungskomponenten, welche zumeist wenigstens mit einer Kommunikationsschnittstelle ausgerüstet sind, kann somit, ohne zusätzliche Hardware eine Initialisierung der Automatisierungskomponente realisiert werden. Erfindungsgemäß wird mit Vorteil eine Eigenschaft der Kommunikationsschnittstelle zum Initialisieren des Datenspeichers verwendet.

Die Rückkopplung der Signale an der Kommunikationsschnittstelle der Automatisierungskomponente wird in einem Rechenbaustein als ein Initialisierungssignal erkannt. Da der Rechenbaustein der Automatisierungskomponente zur Aufrechterhaltung der Kommunikation und beispielsweise Ausführung von Grundfunktionen der Automatisierungskomponente bereits vorhanden ist, kann er auf vorteilhafte Weise zum Erkennen der Rückkopplung weitergebildet werden.

Zweckmäßig hierbei ist, dass das Initialisierungssignal eine Funktion auslöst, welche den Datenspeicher mit Anfangswerten belegt. Die in den Datenspeicher geschriebenen Anfangswerte entsprechen vorzugsweise den Kommunikationsparametern im Auslieferungszustand. Nach erfolgreichem Schreiben der Kommunikationsparameter in den Datenspeicher kann die Automatisierungskomponente wieder in Betrieb genommen werden. Das Verhalten der Automatisierungskomponente nach dem so genannten Wiederanlauf entspricht dem Verhalten im betriebssicheren Zustand, wie beispielsweise nach einem Hochlauf der Komponente bei Wiederkehr der Versorgungsspannung.

Mit Vorteil wird als Kommunikationsschnittstelle eine Ethernet-Schnittstelle verwendet. Bei nahezu jedem Feldgerät bzw. jeder Automatisierungskomponente mit einer Ethernet-Schnittstelle, welche einen Ethernet-Port aufweist, wird eine Eigenschaft der Schnittstelle zur Generierung des Initialisierungssignals genutzt. Die Ethernet-Schnittstelle besitzt, aufgrund ihrer Vollduplex-Struktur, die Möglichkeit gleichzeitig zu senden und zu empfangen. Wird beispielsweise die Rückkopplung dadurch ausgelöst, dass ein so genannter "loopback" zwischen Sende- und Empfangsleitung hergestellt wird, kann dieses Verfahren für unterschiedliche Varianten der Ethernet-Schnittstelle verwendet werden. Unter "loopback" versteht der Fachmann einen "Kurzschluss" zwischen der Rx-Signalleitung und der Tx-Signalleitung.

Besteht der Feldbus und somit die Ethernet-Schnittstelle aus einer drahtgebundenen Kommunikationsleitung, so wird zur Erzeugung des "loopback" eine elektrische Verbindung zwischen der ersten und der zweiten Datenleitung hergestellt.

Bei einem Feldbus oder einem Datennetzwerk, welches auf einer Glasfaserkommunikation basiert, wird zweckmäßigerweise eine optische Verbindung zwischen der ersten und der zweiten Datenleitung hergestellt.

Vorrichtungsgemäß wird durch die eingangs genannte Automatisierungskomponente die Aufgabe dadurch gelöst, dass der Rechenbaustein zum Erkennen einer Rückkopplung eines Sendesignals der ersten Datenleitung auf die zweite Datenleitung als ein Initialisierungssignal ausgestaltet ist. Ein für die Automatisierungskomponenten zuständiger Servicetechniker, der die Komponenten in den Auslieferungszustand versetzen muss, braucht nun nicht mehr beispielsweise mit einem PC, auf dem eine zugehörige Engineering-Software installiert ist, vor Ort gehen und das Initialisieren der Automatisierungskomponente mit dem PC auslösen. Beispielsweise kann er ohne zusätzlichen PC nur mit einem "Kurzschluss-Stecker" bzw. "loopback-Stecker" ausgerüstet, die entsprechende Automatisierungskomponente in den Auslieferungszustand versetzen.

Der "loopback-Stecker" ist dabei intern so verdrahtet, dass eine Rückkopplung der Sendesignale auf die Empfangssignale, beispielsweise der Ethernet-Schnittstelle erfolgt. Dieser "loopback" bzw. die Rückkopplung wird von einem in der Automatisierungskomponente vorhandenen Rechenbaustein erkannt und löst das Rücksetzen der Automatisierungskomponente aus. Bei dem Rücksetzen wird der Datenspeicher mit Anfangswerten beschrieben. Diese Anfangswerte repräsentieren beispielsweise die Kommunikationsparameter des Auslieferungszustandes der Automatisierungskomponente. Für den Fall, dass die Automatisierungskomponente derart tief in einem Aggregat verbaut ist, so dass nur durch aufwendige Montagearbeiten die Komponente erreicht werden könnte, wird die Servicefreundlichkeit dadurch gesteigert, dass der Servicetechniker am Ende der E-thernetleitung, welche zu der Automatisierungskomponente führt, eine so genannte "loopback-Buchse" auf die Ethernetleitung aufbringt. Analog zu dem Stecker ist die entsprechende Buchse intern ebenso verdrahtet, dass die Sendesignale direkt auf die Empfangssignale zurückgekoppelt werden.

Bevorzugte, jedoch keinesfalls einschränkende Ausführungsbeispiele der Erfindung werden nunmehr anhand der Zeichnung näher erläutert. Im Einzelnen zeigt die
FIG 1 eine Automatisierungskomponente mit einer Kommunikationsschnittstelle,
FIG 2 den prinzipiellen Verlauf eines Verfahrens zur Initialisierung.

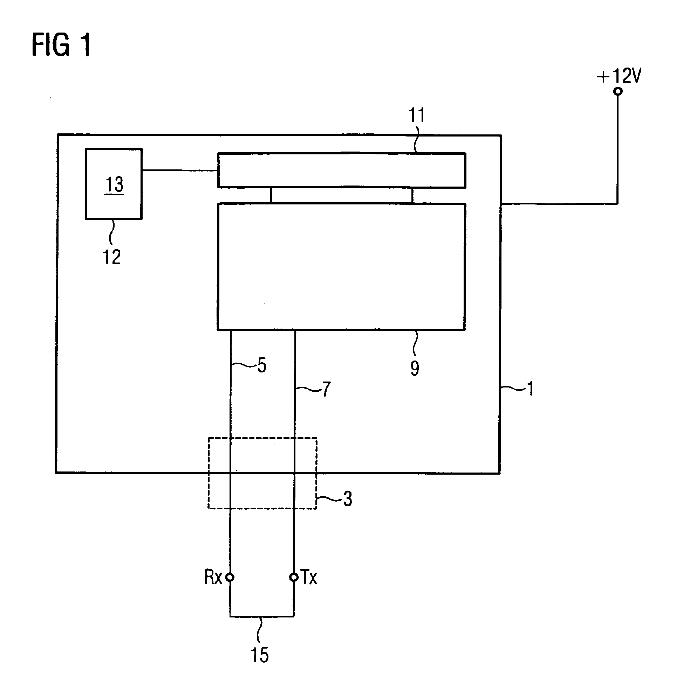

Gemäß FIG 1 ist eine Automatisierungskomponente 1 mit einer Kommunikationsschnittstelle 3 dargestellt. In einer vereinfachten Darstellung weist die Kommunikationsschnittstelle 3, welche eine Ethernet-Schnittstelle darstellt, eine erste Datenleitung 5 und eine zweite Datenleitung 7 auf. Die Datenleitung 5 steht mit dem Ethernet-Port Rx und die Datenleitung 7 mit dem Ethernet-Port Tx in Verbindung. Ein Rechenbaustein 9 zur Bereitstellung von Grundfunktionen der Automatisierungskomponente 1 und der Kommunikationseigenschaften der Automatisierungskomponente 1 ist mit der ersten Datenleitung 5 und der zweiten Datenleitung 7 verbunden. Über nicht näher bezeichnete interne Busleitungen ist der Rechenbaustein 9 mit einem internen Datenspeicher 11 verschaltet. Die Automatisierungskomponente 1 wird mit der Betriebsspannung von +12 V versorgt. In einem Speicherbaustein 12, welcher mit dem Datenspeicher 11 in Verbindung steht, sind Anfangswerte 13 hinterlegt. Diese Anfangswerte 13 repräsentieren die Kommunikationsparameter im Auslieferungszustand der Automatisierungskomponente 1. Soll die Automatisierungskomponente 1 ohne die Verwendung eines zusätzlichen Reset-Schalters oder ohne den Austausch einer Speicherkarte in einen definierten Anfangszustand bzw. in den Auslieferungszustand zurückgesetzt werden, so wird die erste Datenleitung 5 und die zweite Datenleitung 7 der Kommunikationsschnittstelle 3 über die Ports des Sendesignals Tx und des Empfangssignals Rx mit einer Drahtbrücke 15 kurzgeschlossen. Aufgrund eines in dem Rechenbaustein 9 implementierten Kommunikationsprotokolls wird die Rückkopplung des Sendesignals Tx auf das Empfangssignal Rx als "Kurzschluss" erkannt. Da die direkte Verbindung zwischen der ersten Datenleitung 5 und der zweiten Datenleitung 7 eine bestimmte Zeitdauer besteht und erst nach Ablauf dieser bestimmten Zeitdauer das Rücksetzesignal ausgelöst wird, werden eventuelle Störungen oder falsch interpretierte Rückkopplungssignale nicht ausgewertet. Das Initialisierungssignal löst nun innerhalb des Rechenbausteins 9 eine Funktion aus, welche den Datenspeicher 11 mit den Anfangswerten 13 aus dem Speicherbaustein 12 beschreibt. Die Drahtbrücke 15 zwischen der ersten Datenleitung 5 und der zweiten Datenleitung 7 kann nunmehr entfernt werden. Durch eine kurzzeitige Unterbrechung der Spannungsversorgung wird die Automatisierungskomponente 1 zum Wiederanlauf veranlasst. Nach dem Wiederanlauf der Automatisierungskomponente 1 befindet sie sich bezüglich ihrer Kommunikationsparameter im Auslieferungszustand. Gemäß FIG 1 ist die Ethernet-Schnittstelle vereinfacht dargestellt. In einem weiteren nicht gezeigten Ausführungsbeispiel sind die Rx/Tx-Ports bzw. ihre Datenleitungen paarweise ausgeführt. Bei einer Ethernet-Schnittstelle mit einer Bandbreite von 1 GBit/s sind die Rx/Tx sogar achtfach ausgeführt.

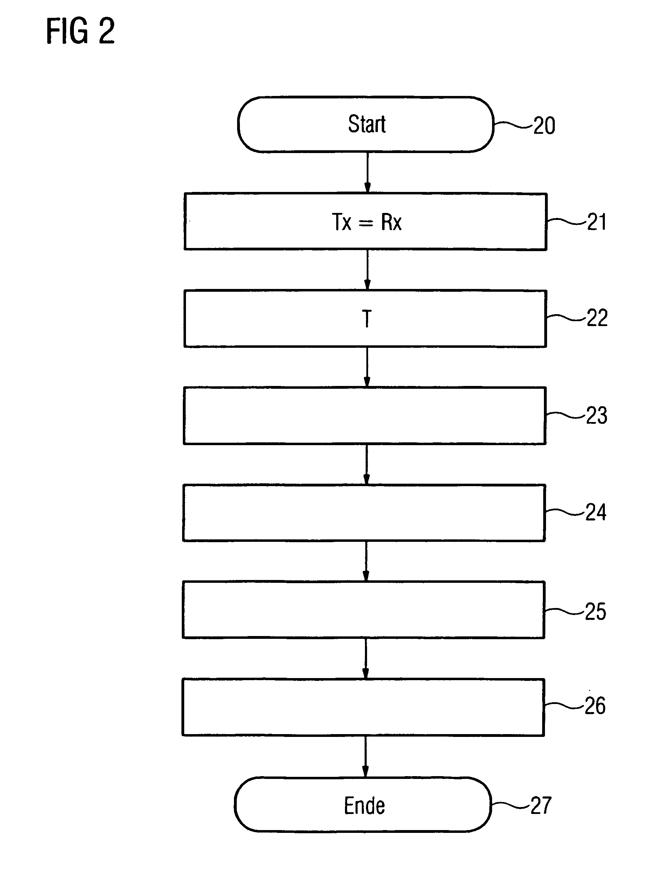

In FIG 2 ist der prinzipielle Ablauf des Initialisierungsverfahrens dargestellt. Nach dem Start 20 wird in einem ersten Schritt 21 der "loopback" bzw. die Rückkopplung zwischen dem Eingangssignal Rx und dem Ausgangssignal Tx hergestellt. In einem zweiten Schritt 22 des Verfahrens erkennt der aus FIG 1 bekannte Rechenbaustein 9 diesen "loopback". Es wird über mehrere Zyklen der Automatisierungskomponente geprüft, ob der "loopback" über eine Zeitdauer T anliegt. Ist dies der Fall, wird mit einem vierten Schritt 24 das Verfahren fortgeführt. Es wird ein Rücksetzesignal generiert. Dieses Rücksetzesignal löst in einem fünften Schritt 25 eine Funktion "Datenspeicher zurücksetzen" aus. Nach einem sechsten Schritt 26, welcher den Wiederanlauf der Funktionen und der Kommunikation der Automatisierungskomponente 1 darstellen, ist die Initialisierungsphase mit Ende 27 beendet.

## Patentansprüche

1. Verfahren zum Initialisieren eines Datenspeichers (11) einer Automatisierungskomponente (1), wobei die Automatisierungskomponente (1) eine Kommunikationsschnittstelle (3) mit zumindest einer ersten Datenleitung (5) und einer zweiten Datenleitung (7) aufweist, wobei als Kommunikationsschnittstelle (3) eine Ethernet-Schnittstelle verwendet wird, ein Sendesignal (Tx) der ersten Datenleitung (5) als ein Empfangssignal (Rx) auf die zweite Datenleitung (7) zurück gekoppelt wird, **dadurch gekennzeichnet, dass** die Rückkopplung der Signale (Tx,Rx) durch einen Kurzschluss zwischen der ersten und der zweiten Datenleitung (5,7) erreicht wird, wobei das von der Automatisierungskomponente (1) in einem Rechenbaustein (9) als ein Initialisierungssignal erkannt und der Datenspeicher (11) initialisiert wird, wobei das Initialisierungssignal eine Funktion auslöst, welche den Datenspeicher (11) mit Anfangswerten (13) belegt.

2. Verfahren nach Anspruch 1, wobei das Sendesignal (Tx)für eine vorbestimmte Zeitdauer (T) zurückgekoppelt wird.

3. Verfahren nach einem der Ansprüche 1 oder 2, wobei eine elektrische Verbindung zwischen der ersten und der zweiten Datenleitung (5, 7) hergestellt wird.

4. Verfahren nach einem der Ansprüche 1 oder 2, wobei eine optische Verbindung zwischen der ersten und der zweiten Datenleitung (5, 7) hergestellt wird.

5. Automatisierungskomponente (1), umfassend eine Kommunikationsschnittstelle (3) mit zumindest einer ersten Datenleitung (5) und einer zweiten Datenleitung (7), wobei die Kommunikationsschnittstelle als eine Ethernet-Schnittstelle ausgestaltet ist, einem Datenspeicher (11) und einem Rechenbaustein (9),
**dadurch gekennzeichnet, dass** der Rechenbaustein (9) derart mit den Datenleitungen (5,6) in Verbindung steht, das eine Rückkopplung eines Sendesignals (Tx) der ersten Datenleitung (5) auf die zweite Datenleitung (7) als ein Initialisierungssignal erkennbar ist, wobei der Rechenbaustein (9) derart ausgestaltet ist, dass die Rückkopplung als Kurzschluss zwischen der ersten und der zweiten Datenleitung (5,7) erkannt wird, wobei ein Speicherbaustein (12) mit dem Datenspeicher (11) in Verbindung steht, wobei das Initialisierungssignal innerhalb des Rechenbausteins (9) eine Funktion auslöst, welche den Datenspeicher (11) mit Anfangswerten (13) aus dem Speicherbaustein (12) beschreibt.

6. Automatisierungskomponente (1) nach Anspruch 5, wobei die Ethernetschnittstelle eine RJ-45-Buchse ist.

## Claims

1. Method for initializing a data memory (11) in an automation component (1), wherein the automation component (1) has a communication interface (3) having at least one first data line (5) and a second data line (7), wherein the communication interface (3) used is an Ethernet interface, a transmitted signal (Tx) on the first data line (5) is fed back as a received signal (Rx) to the second data line (7), **characterized in that** the feedback of the signals (Tx, Rx) is achieved by virtue of a short circuit between the first and second data lines (5, 7), wherein this is recognized as an initialization signal by the automation component (1) in a computation chip (9) and the data memory (11) is initialized, wherein the initialization signal triggers a function which fills the data memory (11) with initial values (13).

2. Method according to Claim 1, wherein the transmitted signal (Tx) is fed back for a predetermined period of time (T).

3. Method according to either of Claims 1 and 2, wherein an electrical connection is set up between the first and second data lines (5, 7).

4. Method according to either of Claims 1 and 2, wherein an optical connection is set up between the first and second data lines (5, 7).

5. Automation component (1), comprising a communication interface (3) having at least one first data line (5) and a second data line (7), wherein the communication interface is in the form of an Ethernet interface, having a data memory (11) and a computation chip (9),
**characterized in that** the computation chip (9) is connected to the data lines (5, 6) such that feedback of a transmitted signal (Tx) on the first data line (5) to the second data line (7) can be recognized as an initialization signal, wherein the computation chip (9) is designed such that the feedback is recognized as a short circuit between the first and second data lines (5, 7), wherein a memory chip (12) is connected to the data memory (11), wherein the initialization signal triggers a function within the computation chip (9) which writes initial values (13) to the data memory (11) from the memory chip (12).

6. Automation component (1) according to Claim 5, wherein the Ethernet interface is an RJ-45 socket.

## Revendications

1. Procédé d'initialisation d'une mémoire ( 11 ) de données d'un composant ( 1 ) d'automatisation, dans lequel le composant ( 1 ) d'automatisation a une interface ( 3 ) de communication avec au moins une première ligne ( 5 ) de données et une deuxième ligne ( 7 ) de données, en utilisant, comme interface ( 3 ) de communication, une interface Ethernet, un signal ( Tx ) d'émission de la première ligne ( 5 ) de données étant réinjecté sur la deuxième ligne ( 7 ), **caractérisé en ce que** l'on obtient la réinjection des signaux ( Tx, Rx ) par un court-circuit entre la première et la deuxième lignes ( 5, 7 ) de données, cela étant détectée par le composant ( 1 ) d'automatisation dans un module ( 9 ) d'ordinateur comme un signal d'initialisation et la mémoire ( 11 ) de données étant initialisée, le signal d'initialisation déclenchant une fonction qui occupe la mémoire ( 11 ) de données par des valeurs ( 13 ) de début.

2. Procédé suivant la revendication 1, dans lequel on réinjecte le signal ( Tx ) d'émission pendant une durée ( T ) déterminée à l'avance.

3. Procédé suivant l'une des revendications 1 ou 2, dans lequel on produit une liaison électrique entre la première et la deuxième lignes ( 5, 7 ) de données.

4. Procédé suivant l'une des revendications 1 ou 2, dans lequel on produit une liaison optique entre la première et la deuxième lignes ( 5, 7 ) de données.

5. Composant ( 1 ) d'automatisation, comprenant une interface ( 3 ) de communication avec au moins une première ligne ( 5 ) de données et une deuxième ligne ( 7 ) de données, l'interface de communication étant formée en interface Ethernet, une mémoire ( 11 ) de données et un module ( 9 ) d'ordinateur, **caractérisé en ce que** le module ( 9 ) d'ordinateur est en liaison avec les lignes ( 5, 6 ) de données, de manière à ce qu'une réinjection d'un signal ( Tx ) d'émission de la première ligne ( 5 ) de données sur la deuxième ligne ( 7 ) de données puisse être détectée comme un signal d'initialisation, le module ( 9 ) d'ordinateur étant conformé de manière à ce que la réinjection soit détectée sous la forme d'un court-circuit entre la première et la deuxième lignes ( 5, 7 ) de données, un module ( 12 ) de mémoire étant en liaison avec la mémoire ( 11 ) de données, le signal d'initialisation déclenchant, au sein du module ( 9 ) d'ordinateur, une fonction qui décrit la mémoire ( 11 ) de données par des valeurs ( 13 ) de début à partir du module ( 12 ) de mémoire.

6. Composant ( 1 ) d'automatisation suivant la revendication suivant la revendication 5, dans lequel l'interface Ethernet est une boîte RJ-45.
